# EUROPÄISCHE PATENTSCHRIFT

(11) **EP 0 548 172 B1**
(45) Veröffentlichungstag und Bekanntmachung des Hinweises auf die Patenterteilung: **07.09.1994**
(21) Anmeldenummer: 91916270.1
(22) Anmeldetag: 12.09.1991
(51) Int. Cl.: A01N 53/00, A01N 25/34, A01N 25/22

(54) **INSEKTIZIDES PRODUKT**
INSECTICIDAL PRODUCT
PRODUIT INSECTICIDE

(30) Priorität: 12.09.1990 DE 9012996 U
(43) Veröffentlichungstag der Anmeldung: 30.06.1993
(73) Patentinhaber: PERYCUT-CHEMIE A.G., 8053 Zürich (CH); BENCSITS, Franz, 8053 Zürich (CH)
(72) Erfinder: BENCSITS, Franz, CH-8053 Zürich (CH)
(74) Vertreter: Grünecker, Kinkeldey, Stockmair & Schwanhäusser Anwaltssozietät
(86) Internationale Anmeldenummer: EP9101736
(87) Internationale Veröffentlichungsnummer: WO9203927

(56) Entgegenhaltungen:
- WO-A-84/00095
- DE-A- 3 421 290
- GB-A- 2 002 635
- US-A- 2 375 250
- US-A- 2 383 815
- US-A- 3 560 613
- PATENT ABSTRACTS OF JAPAN Vol. 9, No. 196 (C-297)(1919) 13 August 1985 & JP,A60 064 902 (RAION K.K.) 13 April 1985 siehe Zusammenfassung
- PATENT ABSTRACTS OF JAPAN Vol. 12, No. 176 (C-498)(3023) 25 Mai 1988 & JP,A,62 283 901 (NISSAN CHEM. IND. LTD.) 9 Dezember 1987 siehe Zusammenfassung
- FETTE-SEIFEN-ANSTRICHMITTEL Bd. 65, Nr. 10, Oktober 1963, HAMBURG, DE Seiten 795 - 799; K. TÄUFEL ET AL.: "Die Sauerstoffaufnahme durch Methyllinoleat in Gegenwart von Citronensäure und einigen ihrer Ester"
- PATENT ABSTRACTS OF JAPAN, Vol. 8, No. 162, (C-235)(1599) 26 July 1984 & JP, A, 59 065 001 (OUJI SEISHI K.K.) 13 April 1984; see abstract

## Beschreibung

Die vorliegende Erfindung betrifft ein insektizides Produkt, umfassend eine mit einer insektiziden Zusammensetzung imprägnierte Unterlage, wobei die insektizide Zusammensetzung jeweils 0,001 bis 10 Gew.-% mindestens eines Pyrethroids, mindestens eines UV-Absorptionsmittels und mindestens eines Antioxidationsmittels enthält, und seine Verwendung zur Bekämpfung fliegender und kriechender Insekten.

Als Pyrethroide werden die insektizid wirksamen Inhaltsstoffe des Pyrethrums sowie deren synthetische Analoga, die sich von der nachstehend angegebenen Struktur ableiten, bezeichnet. Die hauptsächlichen Wirkstoffe in Pyrethrum sind die Cinerine I und II, die Pyrethrine I und II und die Jasmoline I und II (Römpps Chemie-Lexikon, 8. Aufl. (1987), S. 3413). 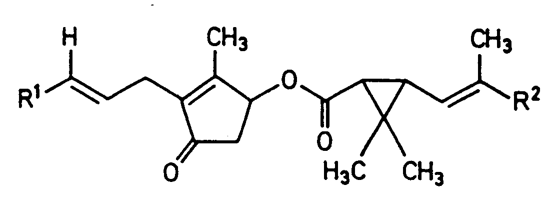
- Pyrethrin I:: R¹ = CH=CH₂, R² = CH₃
- Pyrethrin II:: R¹ = CH=CH₂, R² = COOCH₃
- Cinerin I:: R¹ = R² = CH₃
- Cinerin II:: R¹ = CH₃, R² = COOCH₃
- Jasmolin I:: R¹ = C₂H₅, R² = CH₃
- Jasmolin II:: R¹ = C₂H₅, R² = COOCH₃
- Allethrin:: R¹ = H, R² = CH₃
Pyrethrum wird aus den getrockneten Blütenköpfen verschiedener Pyrethrum- oder Chrysanthemum-Arten durch Pulverisieren oder Extraktion gewonnen und enthält als Hauptwirkstoffe Pyrethroide, wie Pyrethrine, Cinerine und Jasmoline. Neben Nikotin ist Pyrethrum das stärkste pflanzliche Insektizid; seine Wirksamkeit wird jedoch durch Sonnenlicht und Wärme verringert (Römpps Chemie-Lexikon, 8. Aufl. (1987), S. 3414). Der Mangel an Stabilität, aber auch der hohe Preis der natürlichen Pyrethroide hat zur Entwicklung zahlreicher synthetischer Derivate geführt.

Die Pyrethroide werden im allgemeinen als Isomerengemische eingesetzt. Sie werden seit langem als Insektenvernichtungsmittel verwendet, insbesondere gegen Stubenfliegen, Kakerlaken bzw. Schaben und anderes Hausungeziefer, Motten, Kornkäfer, Moskitos, Garten- und Gewächshausschädlinge, Heu- und Sauerwurm im Weinbau und Baumwollschädlinge. Besonders die natürlichen Pyrethroide zeichnen sich durch einen raschen sogenannten "Knock down-Effekt" aus, d.h. die Insekten sind zwar rasch, aber nur vorübergehend gelähmt und erholen sich wieder. Verantwortlich für diesen unerwünschten Effekt ist der oxidative Entgiftungsstoffwechsel der Insekten.

Wegen der Instabilität von Pyrethroiden gegenüber Licht und Luftsauerstoff werden den pyrethroiden Insektiziden in der Regel UV-Stabilisatoren und Antioxidationsmittel zugesetzt. GB-A-2 002 635 beschreibt ein schnell verdampfendes pyrethroides Insektizid, das neben einem Pyrethroid noch mindestens eine Verbindung aus der Gruppe, bestehend aus Phthalsäureestern, aliphatischen Estern, aliphatischen dibasischen Estern, aromatischen Carbonsäureestern, höheren aliphatischen Alkoholen, Alkoholen mit mehreren OH-Gruppen, Glycolethern und Kohlenwasserstoffen mit 10 oder mehr Kohlenstoffatomen, sowie ein Antioxidationsmittel enthält. Als Antioxidationsmittel sind Dibutylhydroxytoluol, Butylhydroxyanisol, n-Propylgallat, Tocopherol, Octadecyl-3- (3,5-di-tert.-butyl-4-hydroxyphenyl)propionat, Pentaerythyl-tetrakis[3-(3,5-di-tert.-butyl-4-hydroxyphenyl)propionat], 2,5-Di-tert.-butylhydrochinon, 4,4'-Thiobis(3-methyl-6-tert.-butylphenol) und 2,2'-Methylen-bis-(4-methyl-6-tert.-butylphenol) genannt. Dieses pyrethroide Insektizid kann auf einen porösen Träger aufgebracht sein oder in Form einer Paste, einer Creme oder eines Granulats vorliegen und wird durch ein separates Heizelement auf 150 bis 400 ^{o}C erwärmt, um es rasch zu verdampfen.

US-A-3 560 613 beschreibt eine insektizide Zusammensetzung aus einem Pyrethroid, einem UV-Absorptionsmittel und einem langsam wirkenden Antioxidationsmittel. Das Antioxidationsmittel ist entweder 2,6-Di-tert.-butyl-4-methylphenol oder 2,6-Dioctadecylparacresol.

Insektizide pyrethroidhaltige Zusammensetzungen gegen kriechende und fliegende Insekten werden üblicherweise in flüssiger Form auf die zu behandelnde Fläche mittels Druckgaspackungen oder Handpumpen gesprüht oder in Pulverform als Lockköder ausgelegt. Diese Anwendungsformen besitzen den Nachteil, daß beim Reinigen der behandelten Fläche die insektizide Zusammensetzung entfernt und zur Beibehaltung der gewünschten Wirksamkeit deshalb erneut aufgebracht werden muß, was zu einem großen Verbrauch an Insektizid und somit hohen Kosten bei Daueranwendung führt.

Zur Bekämpfung von lästigen Insekten und Parasiten bei Säugetieren, wie Stallfliegen, Hornfliegen, Zecken und Milben, können den Tieren beispielsweise Halsbänder aus porösem Material angelegt werden, die mit einer Pyrethroid-Zusammensetzung getränkt und mit einer Membran abgedeckt sind. Diese Zusammensetzung kann als Additive UV-Absorptionsmittel und Antioxidationsmittel enthalten (WO 85/03197).DE-A-3 421 290 beschreibt ein Schädlingsbekämpfungsblatt aus einem Trägermaterial, das mit einem Schädlingsbekämpfungsmittel imprägniert ist, und einer Umhüllung für dieses Trägermaterial aus Japan-Papier, Non-woven Fabric, Stoff oder Papier, durch die hindurch das Schädlingsbekämpfungsmittel kontrolliert verdampfen kann. Als Trägermaterialien werden insbesondere Papiere und Vliese genannt. Das Schädlingsbekämpfungsmittel wird nicht näher spezifiziert. Die beschriebenen insektizidhaltigen Materialien entlassen das Insektizid langsam an die Umgebung. Sie sind jedoch nicht geeignet, um beispeilsweise in Haushalten gegen kriechende Insekten eingesetzt zu werden, da sie zum einen zu dick und zum anderen durch ihren Schichtaufbau aus porösem Material und Membran zu empfindlich sind.

Aufgabe der vorliegenden Erfindung ist es deshalb, ein verbessertes insektizides Produkt zur Verfügung zu stellen, das auch gut gegen kriechende Insekten eingesetzt werden kann, das unempfindlich gegenüber Beschädigungen ist und dessen Wirksamkeit über einen langen Zeitraum genutzt werden kann.

Diese Aufgabe wird durch ein insektizides Produkt der genannten Art gelöst, das dadurch gekennzeichnet ist, daß das enthaltene Antioxidationsmittel ein Citronensäureester ist.

Das erfindungsgemäße insektizide Produkt eignet sich zum Vernichten von Ungeziefer, wie Hausungeziefer, insbesondere Fliegen und Kakerlaken bzw. Schaben.

Das erfindungsgemäße Produkt weist gegenüber den herkömmlichen pyrethroidhaltigen Zusammensetzungen den großen Vorteil auf, daß es "mobil" ist, d.h. es kann bei allfälligen Reinigungen der behandelten Fläche leicht entfernt und nach der Reinigung wieder an Ort und Stelle gebracht werden. Im folgenden wird das erfindungsgemäße Produkt deshalb auch als "Teppich" bezeichnet.

Aufgrund der mobilen Anwendung des erfindungsgemäßen Produkts kann die Wirksamkeit der insektiziden Zusammensetzung voll ausgenutzt werden, so daß bei geringer Menge an Insektizid eine dauerhafte Schädlingsbekämpfung gewährleistet ist.

Das erfindungsgemäße Produkt ist weiterhin sehr umweltfreundlich und kann auf einfache Weise beseitigt werden.

Die erfindungsgemäße verwendete Unterlage kann aus jedem üblichen imprägnierbaren Material bestehen, das natürlicher oder synthetischer Natur sein kann und Gewebe und Vliese als auch metallische Materialien einschließt. Aus Kostengründen ist ein Schaumstoffmaterial bevorzugt, insbesondere aus Polyethylen.

In einer weiteren bevorzugten Ausführungsform besteht die Unterlage aus einer Polyethylenfolie, insbesondere von 0,0001 bis 0,49 mm Dicke, die von kriechenden Insekten nicht als Hindernis wahrgenommen wird. Durch die Polyethylenfolie wird ein Durchdringen des Insektizids durch die Unterlage auf deren Unterseite verhindert, wodurch die volle Wirksamkeit gewährleistet wird.

Vorzugsweise ist die Unterlage auf einen rutschfesten Träger, wie Gummi oder Kunststoff, aufgebracht. Aus Umweltgründen ist ebenfalls Papier, wie Karton, bevorzugt. Das Verbinden der Unterlage mit dem Träger kann auf jede übliche Weise erfolgen, wobei ein Kaschieren bevorzugt ist.

Nach Abnahme der Wirksamkeit der insektiziden Zusammensetzung kann das erfindungsgemäße Produkt zur Beseitigung beispielsweise wie ein Teppich aufgerollt werden. Vorzugsweise weist es Tragegriffe auf, so daß es als Tasche zusammenfaltbar ist.

Zur leichten und unschädlichen Beseitigung des erfindungsgemäßen Produkts ist die Fläche des Trägers vorzugsweise größer als die Fläche der Unterlage, so daß der Träger an den Seiten über die Unterlage hinausreicht und der Anwender mit der imprägnierten Fläche nicht in Berührung kommt.

Bei Nachlassen der insektiziden Wirksamkeit kann das erfindungsgemäße Produkt auch erneut mit der insektiziden Zusammensetzung imprägniert werden.

In der erfindungsgemäß verwendeten insektiziden Zusammensetzung können alle natürlichen und synthetischen Pyrethroide, entweder allein oder in Mischung, verwendet werden. Als besonders wirksam hat sich dabei natürliches Pyrethrum erwiesen.

Das Pyrethroid wird in einer Menge von 0,001 bis 10 Gew.-%, bevorzugt von 0,01 bis 2 Gew.-% und insbesondere von 0,03 Gew.-%, bezogen auf die Zusammensetzung, verwendet.

Zur Verbesserung der Stabilität der erfindungsgemäß verwendeten insektiziden Zusammensetzung gegenüber Luft und Licht enthält diese mindestens ein UV-Absorptionsmittel und mindestens ein Antioxidationsmittel. Durch die Wahl des Antioxidationsmittels aus Citronensäureestern wird die insektizide Wirksamkeit des erfindungsgemäßen Produkts drastisch verlängert.

Die insektizide Zusammensetzung kann als weiteres Antioxidationsmittel ein Tocopherolderivat und/oder Ascorbylpalmitat enthalten.

Die Tocopherole bzw. Derivate davon sind als weiteres Antioxidationsmittel bevorzugt. Tocopherole sind Naturstoffe mit Vitamin E-Charakter und werden deshalb häufig auch als Vitamin E bezeichnet. Sie leiten sich von dem Grundkörper Tocol ab und unterscheiden sich im Methylierungsgrad an dessen Benzolkern. Erfindungsgemäß können alle bekannten Tocopherole verwendet werden. Bevorzugt sind die DL-α-, -β-, -γ- und -δ-Tocopherole. Tocopherole werden insbesondere als Mischung in einem geeigneten Verhältnis mit mindestens einem Citronensäureester und gegebenenfalls Ascorbylpalmitat eingesetzt.

Die Citronensäureester sind vorzugsweise Mono- bis Triester der Citronensäure mit Alkylalkoholen mit 1 bis 8 Kohlenstoffatomen.

Erfindungsgemäß verwendete UV-Absorptionsmittel sind allgemein bekannt. Besonders geeignete UV-Absorptionsmittel, die in dem hier interessierenden Wellenlängenbereich von 250 bis 350 nm wirksam sind, sind Benzoesäurederivate, beispielsweise p-Aminobenzoesäurederivate, wie Amyl-p-dimethylaminobenzoat und Glyceryl-p-aminobenzoat, oder o-Hydroxybenzoesäurederivate; Benzophenonderivate, beispielsweise 2-Hydroxy-4-(2-hydroxy-3-methacryloxy)-propoxybenzophenon oder 2-Hydroxy-4-methoxybenzophenon-5-sulfonsäure; Campferderivate; Cumarinderivate; Benzimidoazolderivate; Dibenzoylmethanderivate; Zimtsäureesterderivate, beispielsweise Isobutylzinnamat, Ethylzinnamat oder Benzylzinnamat; und Tris(hydroxymethyl)aminomethansalze einer Sulfonsäure, wie das Tris(hydroxymethyl)aminomethansalz der 2-Phenylbenzimidazol-5-sulfonsäure.

Das UV-Absorptionsmittel wird in einer Menge von 0,001 bis 10 Gew.-% bevorzugt von 0,01 bis 5 Gew.-% und insbesondere von 0,03 Gew.-%, bezogen auf die Zusammensetzung, verwendet.

Das Antioxidationsmittel wird in der erfindungsgemäß verwendeten Zusammensetzung in einer Menge von 0,001 bis 10 Gew.-% bevorzugt von 0,01 bis 5 Gew.-% und insbesondere von 0,03 Gew.-%, bezogen auf die Zusammensetzung, verwendet.

Zweckmäßigerweise wird die erfindungsgemäß verwendete insektizide Zusammensetzung in flüssiger Form unter Zusatz eines Verdünnungs- bzw. Lösungsmittels hergestellt. Geeignete Verdünnungsmittel sind Wasser, organische Lösungsmittel oder Öle, wobei eine wäßrige und/oder ölige Emulsion bevorzugt ist. Als organische Verdünnungsmittel können beispielsweise ein- und mehrwertige Alkohole, Glykole, wie 1,2-Propandiol, Ester oder Fettsäuren verwendet werden, während als Öle Mineralöle, gesättigte und ungesättigte Wachs- und Fettsäureester, beispielsweise Pflanzenöle, sowie natürliche und synthetische etherische Öle besonders gut geeignet sind. Zusätzlich kann die insektizide Zusammensetzung Lecithin enthalten. Die insektizide Zusammensetzung wird dann auf die erfindungsgemäß verwendete Unterlage aufgesprüht.

Das erfindungsgemäße insektizide Produkt kann für jede Art von Ungeziefer, gegen die bereits bekannte Pyrethroidzusammensetzungen verwendet werden, eingesetzt werden. Es besitzt eine ausgezeichnete Langzeitwirkung gegen fliegende Insekten, beispielsweise Stubenfliegen und Motten, und kriechende Insekten, beispielsweise Kakerlaken, Ameisen, Silberfischchen, Asseln und Käfer.

Zur Erprobung der anlockenden und insektiziden Wirksamkeit wurden erfindungsgemäße Produkte als "Teppich" bei fliegenden und kriechenden Insekten angewandt. Die Produkte weisen eine ausreichend gute Langzeitwirkung gegen fliegende und kriechende Insekten auf.

## Patentansprüche

1. Insektizides Produkt, umfassend eine mit einer insektiziden Zusammensetzung imprägnierte Unterlage, wobei die insektizide Zusammensetzung jeweils 0,001 bis 10 Gew.-% mindestens eines Pyrethroids, mindestens eines UV-Absorptionsmittels und mindestens eines Antioxidationsmsittels enthält, **dadurch gekennzeichnet**, daß das Antioxidationsmittel ein Citronensäureester ist.

2. Produkt nach Anspruch 1, **dadurch gekennzeichnet**, daß die Unterlage aus einem natürlichen oder synthetischen Material, einschließlich eines Gewebes und eines Vlies, besteht.

3. Produkt nach Anspruch 1 oder 2, **dadurch gekennzeichnet**, daß die Unterlage aus einer Polyethylenfolie besteht.

4. Produkt nach Anspruch 3, **dadurch gekennzeichnet**, daß die Polyethylenfolie eine Dicke von 0,0001 bis 0,49 mm aufweist.

5. Produkt nach einem der Ansprüche 1 bis 4, **dadurch gekennzeichnet**, daß die Unterlage auf einen Träger aufgebracht ist.

6. Produkt nach Anspruch 5, **dadurch gekennzeichnet**, daß der Träger auf die Unterlage aufkaschiert ist.

7. Produkt nach Anspruch 5 oder 6, **dadurch gekennzeichnet**, daß der Träger aus einem Kunststoff, Gummi oder Papier besteht.

8. Produkt nach einem der Ansprüche 1 bis 7, **dadurch gekennzeichnet**, daß das UV-Absorptionsmittel ein Benzoesäurederivat, ein Benzophenonderivat ein Benzoxazolderivat, ein Campherderivat, ein Cumarinderivat, ein Benzimidazolderivat, ein Dibenzoylmethanderivat, ein Zimtsäureesterderivat oder ein Tris(hydroxymehtyl)aminomethansalz einer 5-Sulfonsäure ist.

9. Produkt nach einem der Ansprüche 1 bis 8, **dadurch gekennzeichnet**, daß in der insektiziden Zusammensetzung als weiteres Antioxidationsmittel ein Tocopherolderivat und/oder Ascorbylpalmitat enthalten ist.

10. Produkt nach Anspruch 9, **dadurch gekennzeichnet**, daß als Tocopherolderivat ein DL-α-, -β-, γ- und/oder -δ-Tocopherolderivat eingesetzt wird.

11. Produkt nach einem der Ansprüche 1 bis 10, **dadurch gekennzeichnet**, daß die insektizide Zusammensetzung ein Verdünnungsmittel enthält.

12. Produkt nach Anspruch 11, **dadurch gekennzeichnet**, daß die insektizide Zusammensetzung in wäßriger und/oder öliger Emulsion vorliegt.

13. Produkt nach einem der Ansprüche 1 bis 12, **dadurch gekennzeichnet**, daß die insektizide Zusammensetzung zusätzlich Lecithin enthält.

14. Produkt nach einem der Ansprüche 1 bis 13, **dadurch gekennzeichnet**, daß es an den Seiten Tragegriffe aufweist.

15. Verwendung des insektiziden Produkts nach einem der Ansprüche 1 bis 14 zur Bekämpfung von fliegenden und kriechenden Insekten, insbesondere von Fliegen und Kakerlaken.

## Claims

1. Insecticide product comprising a substrate impregnated with an insecticide composition, whereby the insecticide composition contains 0.001 to 10 % w/w of each of at least one pyrethroid, at least one UV absorber and at least one antioxidant, **characterised in that** the antioxidant is a citrate.

2. Product according to claim 1, **characterised in that** the substrate consists of a natural or synthetic material, including a woven and a non-woven fabric.

3. Product according to claim 1 or 2, **characterised in that** the substrate consists of a polyethylene film.

4. Product according to claim 3, **characterised in that** the polyethylene film exhibits a thickness of 0.0001 to 0.49 mm.

5. Product according to one of claims 1 to 4, **characterised in that** the substrate is applied on to a backing.

6. Product according to claim 5, **characterised in that** the backing is laminated on to the substrate.

7. Product according to claim 5 or 6, **characterised in that** the backing consists of a plastic, rubber or paper.

8. Product according to one of claims 1 to 7, **characterised in that** the UV absorber is a benzoic acid derivative, a benzophenone derivative, a benzoxazole derivative, a camphor derivative, a coumarin derivative, a benzimidazole derivative, a dibenzoylmethane derivative, a cinnamate derivative or a tris(hydroxymethyl)aminomethane salt of a 5-sulphonic acid.

9. Product according to one of claims 1 to 8**, characterised in that** a tocopherol derivative and/or ascorbyl palmitate is contained in the insecticide composition as an additional antioxidant.

10. Product according to claim 9, **characterised in that** a DL-α-, -β-, γ- and/or -δ-tocopherol derivative is used as the tocopherol derivative.

11. Product according to one of claims 1 to 10, **characterised in that** the insecticide composition contains a diluent.

12. Product according to claim 11, **characterised in that** the insecticide composition is present in an aqueous and/or oily emulsion.

13. Product according to one of claims 1 to 12, **characterised in that** the insecticide composition additionally contains lecithin.

14. Product according to one of claims 1 to 13, **characterised in that** it exhibits carrying handles on the sides.

15. Use of the insecticide product according to one of claims 1 to 14 for the control of flying and crawling insects, particularly of flies and cockroaches.

## Revendications

1. Produit insecticide comprenant une base imprégnée d'une composition insecticide, la composition insecticide contenant à chaque fois 0,001 à 10 % en poids d'au moins un pyréthroïde, au moins un agent d'absorption UV et au moins un anti-oxydant, caractérisé en ce que l'anti-oxydant est un ester de l'acide citrique.

2. Produit selon la revendication 1, caractérisé en ce que la base se compose d'une matière naturelle ou synthétique, y compris un tissu et un non tissé.

3. Produit selon les revendications 1 ou 2, caractérisé en ce que la base se compose d'une feuille de polyéthylène.

4. Produit selon la revendication 3, caractérisé en ce que la feuille de polyéthylène présente une épaisseur de 0,0001 à 0,49 mm.

5. Produit selon l'une des revendications 1 à 4, caractérisé en ce que la base est appliquée sur un support.

6. Produit selon la revendication 5, caractérisé en ce que le support est contrecollé sur la base.

7. Produit selon les revendications 5 ou 6, caractérisé en ce que le support se compose d'une matière plastique, d'un caoutchouc ou d'un papier.

8. Produit selon l'une des revendications 1 à 7, caractérisé en ce que l'agent d'absorption UV est un dérivé de l'acide benzoïque, un dérivé de la benzophénone, un dérivé du benzoxazol, un dérivé du camphre, un dérivé de la coumarine, un dérivé du benzimidazol, un dérivé du dibenzoylméthane, un dérivé d'ester cinnamique ou un sel de tris-(hydroxyméthyl)-aminométhane d'un acide 5-sulfonique.

9. Produit selon l'une des revendications 1 à 8, caractérisé en ce qu'un dérivé du tocophérol et/ou du palmitate d'ascorbyle sont présents dans la composition insecticide comme agent anti-oxydant supplémentaire.

10. Produit selon la revendication 9, caractérisé en ce qu'on utilise comme dérivé du tocophérol un dérivé du DL-α-, du β-, du γ- et/ou du δ-tocophérol.

11. Produit selon l'une des revendications 1 à 10, caractérisé en ce que la composition insecticide contient un diluant.

12. Produit selon la revendication 11, caractérisé en ce que la composition insecticide est présente en émulsion aqueuse et/ou huileuse.

13. Produit selon l'une des revendications 1 à 12, caractérisé en ce que la composition insecticide contient en outre de la lécithine.

14. Produit selon l'une des revendications 1 à 13, caractérisé en ce qu'il présente des poignées sur les côtés.

15. Utilisation du produit insecticide selon l'une des revendications 1 à 14 pour lutter contre les insectes volants et rampants, en particulier contre les mouches et les blattes.
